# EUROPÄISCHE PATENTSCHRIFT

(11) **EP 3 221 477 B1**
(45) Veröffentlichungstag und Bekanntmachung des Hinweises auf die Patenterteilung: **03.06.2020**
(21) Anmeldenummer: 15747457.8
(22) Anmeldetag: 03.08.2015
(51) Int. Cl.: C21D 8/02, C21D 9/46, C22C 38/00

(54) **VERFAHREN ZUR HERSTELLUNG EINES AUFGESTICKTEN VERPACKUNGSSTAHLS**
METHOD FOR PRODUCING A NITRIDED PACKAGING STEEL
PROCÉDÉ DE FABRICATION D'UN ACIER D'EMBALLAGE NITRÉ

(30) Priorität: 19.11.2014 DE 102014116929
(43) Veröffentlichungstag der Anmeldung: 27.09.2017
(73) Patentinhaber: ThyssenKrupp Rasselstein GmbH, 56624 Andernach (DE); thyssenkrupp AG, 45143 Essen (DE)
(72) Erfinder: MASSICOT, Blaise, 56659 Burgbrohl (DE); KÖHL, Manuel, 56743 Mending (DE); KAUP, Burkhard, 56626 Andernach (DE); SAUER, Reiner, 56566 Heimbach-Weis (DE); KLEMMER, Ricarda, 53121 Bonn (DE); KIEWITZ, Chrysanthus, 53424 Remagen (DE)
(74) Vertreter: Charrier Rapp & Liebau
(86) Internationale Anmeldenummer: PCT/EP2015/067835
(87) Internationale Veröffentlichungsnummer: WO 2016/078784

(56) Entgegenhaltungen:
- EP-A1- 1 709 208
- EP-A1- 2 578 718
- EP-A1- 2 762 601
- WO-A1-2013/092170
- JP-A- H11 315 343
- JP-A- S53 127 333
- FRISK ET AL: "A new assessment of the Fe-N phase diagram", CALPHAD. COMPUTER COUPLING OF PHASE DIAGRAMS AND THERMOCHEMISTRY, NEW YORK, NY, US, vol. 11, no. 2, 1 April 1987 (1987-04-01), pages 127-134, XP024151819, ISSN: 0364-5916, DOI: 10.1016/0364-5916(87)90004-6 [retrieved on 1987-04-01]

## Beschreibung

Die Erfindung betrifft ein Verfahren zur Herstellung eines aufgestickten Verpackungsstahls mit den Merkmalen des Anspruchs 1 sowie einen mit dem Verfahren hergestellten Verpackungsstahl in Form eines kaltgewalzten Stahlflachprodukts mit den Merkmalen des Anspruchs 15.

Aus dem Stand der Technik ist es bekannt, die Festigkeit von Stählen durch Einbringen von ungebundenem, im Stahl gelösten Stickstoff zu erhöhen. Das Einbringen von ungebundenem Stickstoff in den Stahl wird als Aufsticken bzw. Nitrieren oder Nitridieren bezeichnet und stellt ein bekanntes Verfahren zum Härten von Stahl und Stahlprodukten dar.

Auch das Aufsticken von Stahlflachprodukten wie Stahlbleche oder Stahlbänder, welche für die Herstellung von Verpackungen vorgesehen sind (im Folgenden als Verpackungsstahl bezeichnet), ist aus dem Stand der Technik bekannt. In der EP 0 216 399 B1 wird beispielsweise ein Stahlblech für Verpackungszwecke sowie ein Verfahren zu dessen Herstellung beschrieben, welches aus einem aluminiumberuhigten, kontinuierlich gegossenen Kohlenstoff-Mangan-Stahl hergestellt wurde und durch Aufsticken eine Menge an ungebundenem, gelösten Stickstoff erhalten hat, wobei die Mindestmenge an ungebundenem Stickstoff in Abhängigkeit einer gewünschten Härtekategorie des Stahlblechs definiert ist und (beispielsweise für die Härtekategorie T61 des europäischen Standards 145-78) eine Menge an ungebundenem Stickstoff von wenigstens 5 ppm aufweist. Die chemische Zusammensetzung des dort offenbarten Stahlblechs entspricht bezüglich des Kohlenstoff- und Mangangehalts den üblichen weichen Stählen und weist beispielsweise einen Kohlenstoffgehalt im Bereich von 0,03 - 0,1 Gew.-% und einen Mangangehalt von 0,15 - 0,5 Gew.-% auf. Das Stahlblech zeichnet sich dabei durch eine hohe Streckgrenze im Bereich von 350 - 550 N/mm² aus. Für die Menge an ungebundenem, im Stahl gelösten Stickstoff wird dabei ein Maximalwert von 100 ppm angegeben und damit begründet, dass das Stahlblech bei einem höheren Gehalt an ungebundenem Stickstoff aufgrund der damit verbundenen Festigkeitserhöhung nicht mehr kaltwalzbar und damit nicht für die vorgesehene Verwendung als kaltgewalzter Verpackungsstahl geeignet ist.

In dem Verfahren zur Herstellung dieses bekannten Verpackungsstahls wird zunächst ein Stahl kontinuierlich gegossen, anschließend warmgewalzt, kaltgewalzt, rekristallisierend geglüht und schließlich nachgewalzt. Nach dem Nachwalzen erfolgt eine thermische Nachbehandlung, bei der freie Versetzungen, die in dem Stahl durch das Nachwalzen gebildet werden, durch den durch das Aufsticken eingebrachten ungebundenen Stickstoff fixiert werden, um die Härte und Streckgrenze über die Werte nach dem Nachwalzen zu erhöhen. Die thermische Nachbehandlung kann dabei zweckmäßig mit einer anderen thermischen Behandlung des nachgewalzten Stahls kombiniert werden, welche im Rahmen der Herstellung eines Verpackungsstahls ohnehin durchzuführen ist, wie z.B. beim Aufschmelzen einer auf die Oberfläche des Stahlblechs elektrolytisch aufgebrachten Zinnschicht oder beim Einbrennen einer auf die Stahlblechoberfläche aufgebrachten Lackschicht.

Wegen der in der EP 0 216 399 B1 vorgeschlagenen Obergrenze für die Menge des ungebundenen und im Stahl gelösten Stickstoff von 100 ppm sind die Festigkeiten dieses bekannten Verpackungsstahls limitiert. Es erscheint grundsätzlich möglich, Stahlbleche mit noch höherem Gehalt an ungebundenem Stickstoff im Stahl herzustellen, um dadurch Zugfestigkeiten oberhalb von 600 MPa zu erzielen. So sind beispielsweise in der EP 1 342 798 B1 und der DE 1 433 690 A1 aufgestickte Stähle mit einem Stickstoffgehalt von bis zu 250 ppm bzw. bis zu 400 ppm beschrieben. Allerdings haben sich derart hohe Gehalte an ungebundenem Stickstoff im Stahl in der Praxis nicht realisieren lassen.

Das Aufsticken eines Stahls kann beim Herstellungsprozess des Stahls durch Einbringen von Stickstoff in die Stahlschmelze, beispielsweise durch Einblasen von Stickstoffgas N₂, eingebracht werden. Ein Verfahren zum Aufsticken von Stahlschmelzen bei der Stahlherstellung im Sauerstoffaufblasverfahren ist beispielsweise in der DE 2 237 498 beschrieben. Stahlflachprodukte, insbesondere Stahlbänder, können durch eine Oberflächenkonditionierung aufgestickt werden, beispielsweise durch Eindiffusion von Stickstoff in die Stahlblechoberfläche, was beispielsweise durch Gasnitrieren in einer Ammoniak-Atmosphäre bei leichtem Überdruck, durch Badnitrieren in stickstoffhaltigen Salzbädern oder durch Plasmanitrieren erfolgen kann. Durch Eindiffusion von Stickstoff bildet sich an der Stahlblechoberfläche dabei eine harte, oberflächliche Verbindungsschicht sowie eine darunter liegende Diffusionszone aus, in welcher der Stickstoff bis zu einer bestimmten Tiefe in der (ferritischen) Stahlmatrix eingelagert ist.

Aus der WO2005/056841 A1 ist ein Verfahren zur Herstellung eines Stahlblechs für Behälter bekannt, in dem während des Glühens des Stahlblechs in einem Glühofen eine oberflächennahe Schicht mit einer Schichtdicke von 1/8 der gesamten Schichtdicke von höchstens 0,4 mm mit einem ersten, höheren Stickstoffgehalt von bis zu 2 Gew.% und eine darunter liegende Schicht mit einer Schichtdicke von 1/4 der gesamten Schichtdicke mit einem gegenüber dem höheren Stickstoffgehalt um mindestens 10 ppm niedrigeren Stickstoffgehalt durch Einleiten von Ammoniakgas in den Glühofen aufgestickt wird, wobei das im Glühofen geglühte Stahlblech anschließend von 550°C auf 300°C bei Kühlraten von mehr als 10°C/s abgekühlt wird.

Aus JP 53 127 333-A ist ein Verfahren zur Herstellung eines flitterfreien, galvanisierten Stahlblechs bekannt, in dem das Stahlblech zunächst durch einen Glühofen mit einer spezifischen Gasatmosphäre geleitet wird, bevor eine galvanische Beschichtung des Stahlblechs erfolgt. Zur Erzielung einer spezifischen Gasatmosphäre wird ein Gasgemisch mittels Düsen in den Glühofen geleitet.

Die EP 2578718 A1 und die EP 2762601 A1 offenbaren ebenfalls galvanisierte Stahlbleche.

Aus JP 11-315 343 - A ist ein Stahlblech für die Herstellung von geschweißten Dosenkörpern sowie ein Verfahren zur Herstellung des Stahlblechs bekannt, wobei das Stahlblech einen Kohlenstoffgehalt von 0,06 Gew.% oder weniger und einen Stickstoffgehalt von 0,005 bis 0,015 Gew.% aufweist und in dem Verfahren ein kontinuierliches Glühen des Stahlblechs in einer NHX-Gasatmosphäre erfolgt.

Die WO2013/092170A1 offenbart ein Verfahren zur Herstellung eines Verpackungsstahls mit einem mehrphasigen Gefüge.

Die Aufgabe der Erfindung besteht darin, ein Stahlflachprodukt (Stahlblech oder Stahlband) für die Herstellung von Verpackungen aufzuzeigen, welches eine möglichst hohe Festigkeit bei gleichzeitig guter Bruchdehnung und guten Umformeigenschaften aufweist. Insbesondere soll ein Verpackungsstahl mit Festigkeiten von wenigstens 600 MPa bei einer Bruchdehnung von wenigstens 5 % zur Verfügung gestellt werden. Der höherfeste Verpackungsstahl muss dabei für den vorgesehenen Verwendungszweck als Verpackungsstahl gleichzeitig eine ausreichende Umformfähigkeit aufweisen, beispielsweise in Tiefzieh- oder Abstreckziehverfahren, damit aus dem Stahlflachprodukt bestimmungsgemäß Verpackungen, wie z.B. Konserven- oder Getränkedosen, hergestellt werden können. Der als Stahlflachprodukt vorliegende Verpackungsstahl soll dabei die üblichen Dicken im Fein- und Feinstblechbereich aufweisen, welche üblicherweise im Bereich von 0,1 bis 0,5 mm (Feinstblech) bzw. 0,5 bis 3 mm (Feinblech) liegen und durch Kaltwalzen erzeugt werden.

Diese Aufgaben werden mit einem Verfahren mit den Merkmalen des Anspruchs 1 sowie mit einem aufgestickten Verpackungsstahl in Form eines Stahlflachprodukts mit den Merkmalen des Anspruchs 15 gelöst. Bevorzugte Ausführungsformen des erfindungsgemäßen Verfahrens und des Verpackungsstahls sind in den abhängigen Ansprüchen aufgezeigt.

Mit dem erfindungsgemäßen Verfahren kann ein aufgestickter Verpackungsstahl mit einem Kohlenstoffgehalt von 400 bis 1200 ppm und einer Menge von ungebundenem, im Stahl gelösten Stickstoff von mehr als 100 ppm und bevorzugt von mehr als 150 ppm und besonders bevorzugt von mehr als 210 ppm hergestellt werden, wobei zunächst ein warmgewalztes und ggf. bereits aufgesticktes Stahlprodukt zu einem Stahlflachprodukt kaltgewalzt wird, das kaltgewalzte Stahlflachprodukt danach in einem Glühofen rekristallisierend geglüht wird, wobei in den Glühofen ein stickstoffhaltiges Gas eingeleitet und auf das Stahlflachprodukt gerichtet wird, um ungebundenen Stickstoff in das Stahlflachprodukt in einer Menge entsprechend einer Konzentration von mehr als 100 ppm einzubringen oder die Menge von ungebundenem Stickstoff im Stahlflachprodukt auf eine Konzentration von mehr als 100 ppm zu erhöhen. Unmittelbar nach dem Glühen wird das Stahlflachprodukt mit einer Kühlrate von wenigstens 100 K/s abgekühlt. Durch diese Verfahrensführung wird einerseits ein mehrphasiges Gefüge in dem Stahlflachprodukt ausgebildet, welches Ferrit und mindestens einen der Gefügebestandteile Martensit, Bainit, Troostit/Perlit und/oder Restaustenit umfasst. Stahlprodukte mit einem derartigen Gefüge weisen gegenüber monophasigen Stählen eine erhöhte Festigkeit auf. Anderseits wird durch das Aufsticken des Stahlflachprodukts während des rekristallisierenden Glühens die Stickstoffkonzentration im Stahl auf Wertebereiche (von mehr als 100 ppm) erhöht, welche ebenfalls eine Festigkeitssteigerung bewirken.

Es hat sich gezeigt, dass für die Ausbildung eines mehrphasigen Gefüges der Kohlenstoffgehalt des Stahls mindestens 0,04 Gew.% betragen sollte. Die obere Grenze des Kohlenstoffgehalts ist einerseits durch die von den Normen für Verpackungsstahl geforderten Obergrenzen von ca. 0,12 Gew.% (wie im Standard ASTM A623-11 definiert) und andererseits technologisch durch die Kaltwalzbarkeit vorgegeben, wobei erfahrungsgemäß ein warmgewalztes Stahlprodukt mit mehr als 0,12 Gew.% Kohlenstoffgehalt nur sehr schwer kaltgewalzt werden kann.

Das Aufsticken des Stahls kann dabei zweckmäßig in zwei Stufen erfolgen. In einer ersten Stufe wird eine Stahlschmelze auf einen Stickstoffgehalt von maximal 160 ppm nitriert, indem der Stahlschmelze Stickstoff, beispielsweise in Form eines stickstoffhaltigen Gas und/oder eines stickstoffhaltigen Feststoffs, zugeführt wird. Aus der so aufgestickten Stahlschmelze wird eine Bramme gegossen und zu einem Warmband warmgewalzt. Das Warmband wird anschließend (nach Abkühlung auf Umgebungstemperatur) erforderlichenfalls gebeizt und zu einem Stahlflachprodukt (Stahlblech oder Stahlband) kaltgewalzt. Das kaltgewalzte Stahlflachprodukt wird danach in dem Glühofen rekristallisierend geglüht. In dem Glühofen wird dabei die zweite Stufe des Aufstickens durchgeführt, indem in den Glühofen ein stickstoffhaltiges Gas eingeleitet und auf das Stahlflachprodukt gerichtet wird, um die Menge an ungebundenem Stickstoff im Stahl über die bereits in der ersten Stufe des Aufstickens in die Stahlschmelze eingebrachte Stickstoffmenge hinaus weiter zu erhöhen.

Durch das zweistufige Aufsticken des Verpackungsstahls wird gewährleistet, dass das Warmband mit den üblicherweise für die Herstellung von Verpackungsstählen verwendeten Kaltwalzvorrichtungen (Walzstraßen) problemlos zu einem Stahlflachprodukt, insbesondere zu einem Stahlband, kaltgewalzt werden kann. Dies wird dadurch ermöglicht, dass in der ersten Stufe des Aufstickens ein Gehalt an ungebundenem Stickstoff von höchstens 160 ppm in die Stahlschmelze eingebracht wird. Das aus der aufgestickten Stahlschmelze durch Warmwalzen erzeugte Warmband bleibt bei diesen Stickstoffgehalten kaltwalzbar, so dass aus dem Warmband durch Kaltwalzen ein Fein- oder Feinstblech in den für Verpackungszwecke üblichen Dicken herstellbar ist. Höhere Stickstoffgehalte in der Stahlschmelze führen darüber hinaus auch zu unerwünschten Defekten in der aus der Stahlschmelze gegossenen Bramme. Die gewünschte Festigkeit des Verpackungsstahls von bevorzugt mehr als 600 MPa wird beim Kaltwalzen und in der zweiten Stufe des Aufstickens des Stahlflachprodukts während seines rekristallisierenden Glühens erzielt. Dadurch können Stahlflachprodukte, insbesondere Stahlbänder, mit Dicken im Fein- und Feinstblechbereich, insbesondere im Bereich von 0,1 bis 0,5 mm, zur Verwendung als Verpackungsstahl mit sehr hohen Zugfestigkeiten bei gleichzeitig hoher Bruchdehnung von bevorzugt wenigstens 5 % hergestellt werden, ohne eine Beschränkung in den Umformeigenschaften zu erleiden.

In bevorzugten Ausführungsbeispielen des erfindungsgemäßen Verfahrens erfolgt das Aufsticken der Stahlschmelze in der ersten Stufe durch Einleiten von Stickstoffgas (N₂) und/oder Kalkstickstoff (CaCN₂) und/oder Manganstickstoff (MnN) in die Stahlschmelze.

Das Aufsticken des Stahlflachprodukts in der zweiten Stufe erfolgt bevorzugt durch Einleiten von Ammoniakgas (NH₃) in den Glühofen, in dem das Stahlflachprodukt rekristallisierend geglüht wird. Zweckmäßig wird das Ammoniakgas dabei mittels Sprühdüsen auf die Oberfläche des Stahlflachprodukts aufgegast. Die Menge an Ammoniakgas, die in den Glühofen eingebracht wird, wird bevorzugt so eingestellt, dass sich in dem Glühofen ein Ammoniakgleichgewicht mit einer Ammoniakkonzentration im Bereich von 0,05 bis 15 % einstellt (in Gew.%, bezogen auf die Gasatmosphäre im Glühofen). Die für ein effektives Aufsticken erforderliche Ammoniakkonzentration in dem Glühofen hängt dabei von der Temperatur im Glühofen ab. Bei idealen Temperaturen im Bereich von 600 bis 650°C reichen bereits Ammoniakkonzentration im Bereich von 0,05 bis 1,5 Gew.% aus, um beim Aufsticken die gewünschten Mengen an ungebundenem Stickstoff (interstitiell) im Stahlflachprodukt einzulagern. Bei höheren Temperaturen, insbesondere oberhalb von 700°C muss die Ammoniakkonzentration im Glühofen entsprechen höher (bis zu 15 Gew.%) gewählt werden, um Stickstoff in nennenswerten Mengen im Stahlflachprodukt einzulagern. Die Ammoniakkonzentration in dem Glühofen wird bevorzugt mittels eines Ammoniaksensors erfasst und der erfasste Messwert der Ammoniak-Gleichgewichtskonzentration wird für eine Regelung der pro Zeiteinheit in den Glühofen eingeleiteten Menge an Ammoniakgas verwendet. Dadurch kann eine gleichbleibende Ammoniakgas-Konzentration in dem Glühofen und damit eine homogene Aufstickung des Stahlflachprodukts mit über die Produktionszeit eines Stahlbands gleichbleibender Qualität und homogener Stickstoffkonzentration über die Länge des Stahlbands gewährleistet werden.

Zur Vermeidung von Oxidationsprozessen wird beim rekristallisierenden Glühen in dem Glühofen neben dem Ammoniakgas, welches zum Aufsticken verwendet wird, noch ein Inertgas in den Glühofen eingeleitet, beispielsweise Stickstoffgas und/oder Wasserstoffgas oder ein Gemisch davon, beispielsweise in einer Zusammensetzung von 95 Gew.-% Stickstoffgas und 5 Gew.-% Wasserstoffgas. Der Glühofen wirkt dadurch auch als abgeschlossene Inertkammer. Das durch den Glühofen durchgeführte Stahlband kommt deshalb beim rekristallisierenden Glühen und Aufsticken bis zur Abkühlung nicht mit einer oxidierenden Umgebung und insbesondere nicht mit Luftsauerstoff in Berührung, weshalb eine Ausbildung von Oxidschichten an der Oberfläche des Stahlbands vermieden werden können.

Die durch das zweistufige Aufsticken des Verpackungsstahls eingebrachten Gesamtmengen an ungebundenem Stickstoff liegen zwischen 100 und 500 ppm, bevorzugt oberhalb von 150 ppm und besonders bevorzugt im Bereich zwischen 210 und 350 ppm. Dabei wird bei einer zweistufigen Aufstickung in der ersten Stufe beim Aufsticken der Stahlschmelze ein Stickstoffgehalt von maximal 160 ppm in die Stahlschmelze eingebracht. Das Einhalten einer Obergrenze von ca. 160 ppm für den Gehalt an ungebundenem Stickstoff in der Stahlschmelze stellt dabei sicher, dass an der aus der Stahlschmelze erzeugten Bramme keine Defekte entstehen, beispielsweise in Form von Poren und Risse, welche durch Umgebungssauerstoff oxidieren können. Weiterhin bleibt das aus der Bramme erzeugte Warmband bei einem Stickstoffgehalt von höchstens 160 ppm kaltwalzbar. Alternativ hierzu kann das Aufsticken auch einstufig erfolgen, wobei dann nur ein Aufsticken des kaltgewalzten Stahlflachprodukts durch Beaufschlagung mit einem stickstoffhaltigen Gas im Durchlaufofen während des rekristallisierenden Glühens erfolgt.

Die (ggf. als zweite Stufe) beim Aufsticken des Stahlflachprodukts im Glühofen durch Beaufschlagung mit einem stickstoffhaltigen Gas (ggf. zusätzlich) einbringbare Menge an ungebundenem Stickstoff liegt im Bereich von 100 bis 350 ppm. Bei Anwendung der beiden Aufstick-Stufen kann damit eine Gesamtmenge an ungebundenem Stickstoff in den erfindungsgemäß hergestellten Verpackungsstahl von bevorzugt mehr als 150 ppm und besonders bevorzugt von mehr als 210 ppm und bis zu 500 ppm eingebracht werden. Dadurch lassen sich Zugfestigkeiten von mehr als 650 MPa und bis zu 1000 MPa erzielen, wobei zwischen dem Gehalt an ungebundenem Stickstoff und der Zugfestigkeit ein linearer Zusammenhang fest gestellt worden ist und bspw. für Zugfestigkeiten von ca. 650 MPa ein Gehalt an ungebundenem Stickstoff von ca. 210 ppm erforderlich ist.

Zur Erhöhung der Festigkeit des kaltgewalzten Stahlflachprodukts trägt neben dem Aufsticken das durch die erfindungsgemäße Wärmebehandlung erzeugte mehrphasige Gefüge des Stahls bei. Zur Ausbildung eines mehrphasigen Gefüges wird das kaltgewalzte Stahlflachprodukts beim rekristallisierenden Glühen in einem Erhitzungsschritt auf Temperaturen oberhalb der Acl-Temperatur (welche bei der verwendeten Legierungskomposition des Stahls in der Regel bei ca. 723°C liegt) erhitzt. Es hat sich gezeigt, dass es zur Ausbildung eines mehrphasigen Gefüges erforderlich ist, das Stahlflachprodukt zumindest kurzzeitig auf eine Temperatur oberhalb der Acl-Temperatur zu erhitzen. Das Erhitzen kann dabei entweder durch Wärmestrahlung im Glühofen oder auch induktiv oder konduktiv erfolgent, wobei über eine induktive oder konduktive Erhitzung sehr hohe Aufheizraten von mehr als 500 K/s erreicht werden können. Beim Erhitzen des kaltgewalzten Stahlflachprodukts wird dieses für eine ausreichend lange Erhitzungsdauer auf Temperaturen oberhalb der Rekristallisations-Temperatur gehalten, um das Stahlflachprodukt rekristallisierend zu glühen, wodurch die Umformfähigkeit des kaltgewalzten Stahlflachprodukts wieder hergestellt wird. Nach dem (zumindest kurzzeitigen) Erhitzen auf Temperaturen oberhalb der Acl-Temperatur wird das Stahlflachprodukt schnell abgekühlt, wobei eine Kühlrate von wenigstens 100 K/s und bevorzugt von mehr als 150 K/s einzuhalten ist, um in dem Stahl ein mehrphasiges Gefüge auszubilden.

Um in dem Glühofen sowohl für das rekristallisierende Glühen und die Ausbildung eines mehrphasigen Gefüges als auch für das Aufsticken optimale thermische Bedingen zu gewährleisten, wird das Stahlflachprodukt in dem Glühofen zweckmäßig einem Glühzyklus mit vorgegebenen Temperaturprofilen unterworfen. In einem ersten Ausführungsbeispiel für einen solchen Glühzyklus wird das kaltgewalzte Stahlflachprodukts in einem Durchlaufglühofen (durch Wärmestrahlung) in einem ersten Erhitzungsschritt zunächst von Umgebungstemperatur mit einer Aufheizrate von zweckmäßig 15 bis 25 K/s und insbesondere von 20 K/s auf eine Haltetemperatur oberhalb der Rekristallisationstemperatur aber noch unterhalb der Acl-Temperatur und insbesondere im Bereich von 600°C bis 650°C, erhitzt und dann über einen Haltezeitraum auf dieser Haltetemperatur (Tₕ) gehalten. Während des Haltezeitraums, der zweckmäßig im Bereich von 80 bis 150 Sekunden und bspw. bei ca. 100 bis 110 Sekunden liegt, wird das Stahlflachprodukt bei der Haltetemperatur (Tₕ) zum Aufsticken mit dem stickstoffhaltigen Gas beaufschlagt. Zweckmäßig wird dabei die Haltetemperatur (Tₕ) so ausgewählt, dass eine möglichst effiziente Einlagerung von Stickstoff in das Stahlflachprodukt gewährleistet werden kann, Es hat sich gezeigt, dass dies insbesondere im Temperaturbereich zwischen 600°C und 650°C der Fall ist. Die AmmoniacKonzentration im Glühofen kann dabei auf niedrige Werte im Bereich von 0,05 bis 1,5 Gew.% eingestellt werden.

Unmittelbar nach dem Aufsticken im Glühofen wird das Stahlflachprodukt in einem zweiten Erhitzungsschritt auf eine Glühtemperatur (T_{g}) oberhalb der Acl-Temperatur undbevorzugt zwischen 740°C ≤ T_{g} ≤ 760°C erhitzt und anschließend mit einer Kühlrate von mehr als 100 K/s abgekühlt. Die Aufheizrate in dem zweiten Erhitzungsschritt beträgt dabei bevorzugt mehr als 100 K/s und besonders bevorzugt mehr als 500 K/s, wobei das Erhitzen in dem zweiten Erhitzungsschritt zur Erzielung solch hoher Aufheizraten dabei zweckmäßig induktiv oder konduktiv erfolgt. Mittels induktiver oder konduktiver Erhitzung können Aufheizraten von über 1000 K/s erzielt werden.

Das Abkühlen mit der bevorzugten Kühlrate von mehr als 100 K/s kann entweder mittels eines kalten Gasstroms (bevorzugt eines Inertgases wie Wasserstoff oder Stickstoff) oder durch Einleiten des Stahlflachprodukts in eine Abschreckflüssigkeit (bspw. einen Wassertank) erfolgen, wobei das Stahlflachprodukt bevorzugt auf Umgebungstemperatur abgekühlt wird.

In einem zweiten Ausführungsbeispiel für einen Glühzyklus wird das kaltgewalzte Stahlflachprodukts in einem Durchlaufglühofen (durch Wärmestrahlung) in einem (einzigen) Erhitzungsschritt zunächst von Umgebungstemperatur mit einer Aufheizrate von zweckmäßig mehr als15 K/s auf eine Haltetemperatur (Tₕ) oberhalb der Acl-Temperatur und insbesondere im Bereich von 740°C bis 760°C erhitzt und in einem anschließenden Halteschritt über eine Haltezeit auf dieser Haltetemperatur (Tₕ) gehalten, wobei das kaltgewalzte Stahlflachprodukt während des Erhitzungsschritts und/oder während des Halteschritts zum Aufsticken mit dem stickstoffhaltigen Gas beaufschlagt wird. Bevorzugt wird das Stahlflachprodukt während des Erhitzungsschritts mit dem stickstoffhaltigen Gas beaufschlagt, da sich gezeigt hat, dass die Aufstickung bei Temperaturen unterhalb von ca. 700°C und insbesondere im Temperaturbereich von 600°C bis 660°C am effizientesten ist. Die Haltezeit, während derer das Stahlflachprodukt auf Temperaturen oberhalb der Acl-Temperatur gehalten wird, liegt dabei zweckmäßig im Bereich von 80 bis 150 Sekunden und bspw. bei ca. 100 - 110 Sekunden.

Zum Aufsticken des Stahlflachprodukts in dem Glühofen wird bevorzugt eine Mehrzahl von Sprühdüsen verwendet, mit denen ein stickstoffhaltiges Gas, wie z.B. Ammoniakgas, gleichförmig auf die Oberfläche des durch den Glühofen laufenden Stahlflachprodukts aufgebracht werden kann. Bei Herstellung eines Stahlbands, welches mit einer Bandgeschwindigkeit von wenigstens 200 m/min durch den Glühofen geleitet wird, werden die mehreren Sprühdüsen bspw. quer zur Bandlaufrichtung und bevorzugt in äquidistantem Abstand zueinander angeordnet. Dadurch ist eine homogene Aufstickung des Stahlflachprodukts über die gesamte Oberfläche möglich.

Durch die Erfassung der Konzentration des in den Glühofen eingebrachten stickstoffhaltigen Gases kann sichergestellt werden, dass während des Durchlaufens des Stahlbands durch den Glühofen eine gleichbleibende Stickstoffatmosphäre im Glühofen aufrechterhalten wird. Dies ermöglicht ein homogenes Aufsticken des Stahlbands über dessen Länge.

Durch Vergleichsversuche konnte festgestellt werden, dass durch das Aufsticken des erfindungsgemäß hergestellten Verpackungsstahls nicht nur dessen Festigkeit erhöht werden kann, sondern dass zusätzlich durch den höheren Gehalt an ungebundenem Stickstoff in dem Stahl eine verbesserte Umformbarkeit zu beobachten ist. Dies zeigt sich insbesondere bei erfindungsgemäß hergestellten Verpackungsstählen, welche mit einem Lack beschichtet werden. Bei herkömmlich lackbeschichteten Verpackungsstählen ist nach einer beim Lackieren zum Einbrennen erforderlichen Wärmebehandlung eine sprunghafte Reduzierung der Bruchdehnung des Stahlflachprodukts bei höheren Festigkeiten zu beobachten. Dieses Phänomen kann bei den erfindungsgemäß hergestellten aufgestickten Stahlflachprodukten nicht beobachtet werden. Hier wird auch bei sehr hohen Festigkeiten von mehr als 650 MPa nach einer Wärmebehandlung beim Lackieren (Lackalterung) keine Reduktion der Bruchdehnung beobachtet. Dies kann möglicherweise dadurch erklärt werden, dass der durch das zweistufige Aufsticken vorhandene hohe Gehalt an ungebundenem Stickstoff und die sehr homogene Verteilung des Stickstoffs in dem Stahl vorhandene Versetzungen zunächst blockiert und diese durch freie Stickstoffatome blockierten Versetzungen bei einer Verformung des Stahlflachprodukts plötzlich in großer Zahl gelöst werden, sobald eine angelegte Zugspannung über einen Grenzwert hinaus erhöht wird. Dadurch können die vielen, durch die Verformung von einer Stickstoffblockade freigesetzten Versetzungen im Stahl wandern, wodurch die Umformbarkeit verbessert wird.

Diese und weitere Vorteile des erfindungsgemäß hergestellten Verpackungsstahls ergeben sich aus dem nachfolgend unter Bezugnahme auf die begleitenden Zeichnungen näher beschriebenen Ausführungsbeispiel. Die Zeichnungen zeigen:
- **Figur 1:**: schematische Darstellung eines ersten Ausführungsbeispiels eines Glühofens, in dem die Aufstickung und das rekristallisierende Glühen eines Stahlflachprodukts gemäß dem erfindungsgemäßen Verfahren durchgeführt wird;
- **Figur 2:**: schematische Darstellung eines zweiten Ausführungsbeispiels eines Glühofens, in dem die Aufstickung und das rekristallisierende Glühen eines Stahlflachprodukts gemäß dem erfindungsgemäßen Verfahren durchgeführt wird;
- **Figur 3:**: graphische Darstellung des zeitlichen Temperaturverlaufs von in dem Glühofen von Figur 1 bei der Durchführung des erfindungsgemäßen Verfahrens durchgeführten Glühzyklen.

In einem ersten Ausführungsbeispiel des erfindungsgemäßen Verfahrens wird als Ausgangsprodukt ein im Stranggießen gefertigtes und warmgewalztes Stahlprodukt mit einer Dicke im Bereich von 2 bis 15 mm Dicke und mit einem Kohlenstoffgehalt von 400 bis 1200 ppm verwendet. Die Legierungszusammensetzung des Stahls erfüllt dabei zweckmäßig die durch Normen für Verpackungsstahl vorgegebenen Grenzwerte (wie z.B. in der Norm ASTM A623-11 "Standard Specification for Tin Mill Products" oder im "European Standard EN 10202" definiert). Bevorzugt weist das als Ausgangsprodukt verwendete Stahlprodukt folgende Obergrenzen für den Gewichtsanteil der Legierungsbestandteile auf (um das Endprodukt in Einklang mit den zitierten Normen für Verpackungsstahl zu bringen):

| | |
|---|---|
| - C: | max. 0,12 %, |
| - Mn: | max. 0,4 %, |
| - Si: | max. 0,04 %, bevorzugt weniger als 0,02 %; |
| - Al: | max. 0,1 %, bevorzugt weniger als 0,08 %; |
| - Cr: | max. 0,1 %, bevorzugt weniger als 0,08 %; |
| - P: | max. 0,03 %, bevorzugt weniger als 0,02 %; |
| - Cu: | max. 0,1 %, bevorzugt weniger als 0,08 %; |
| - Ni: | max. 0,15 %, bevorzugt weniger als 0,08 %; |
| - Sn: | max. 0,04 %, bevorzugt weniger als 0,02 %; |
| - As: | max. 0,02 %, |
| - S: | max. 0,03%, bevorzugt weniger als 0,02 %; |
| - Mo: | max. 0,05 %, bevorzugt weniger als 0,02 %; |
| - V: | max. 0,04 %; |
| - Ti: | max. 0,05 %, bevorzugt weniger als 0,02 %; |
| - Nb: | max. 0,05 %, bevorzugt weniger als 0,02 %; |
| - B: | max. 0,005 % |
| - andereLegierungsbestandteile,einschl.Verunreinigungen: | max. 0,05 %, |
| - Rest Eisen. | |

Ein Stahlprodukt mit einer solchen Legierungszusammensetzung wird in dem erfindungsgemäßen Verfahren zunächst unter einer Dickenreduktion von 50% bis 96% bis zu einer Enddicke im Fein- oder Feinstblechbereich (ca. 0,1 bis 0,5 mm) zu einem Stahlflachprodukt (Stahlblech oder Stahlband) kaltgewalzt. Zweckmäßig wird das Stahlprodukt zu einem Stahlband gewalzt und als Rolle (coil) aufgewickelt. Gemäß der Erfindung wird das Stahlflachprodukt danach in einen Glühofen geführt, um es einerseits rekristallisierend zu glühen und andererseits auf Stickstoffkonzentrationen von mehr als 100 ppm und bevorzugt von mehr als 210 ppm aufzusticken. Unmittelbar nach dem rekristallisierenden Glühen wird das Stahlflachprodukt erfindungsgemäß mit einer Kühlrate von wenigstens 100 K/s zweckmäßig auf Raumtemperatur abgekühlt.

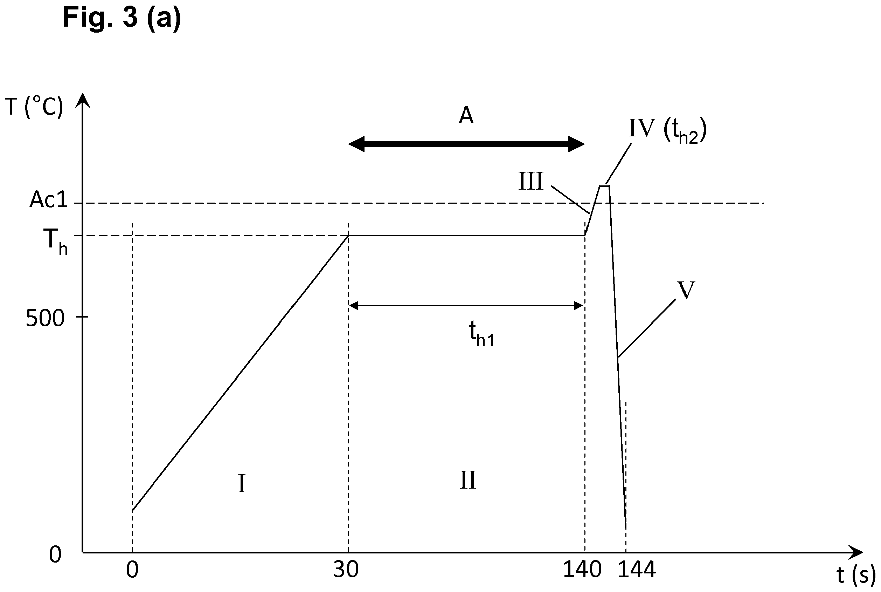

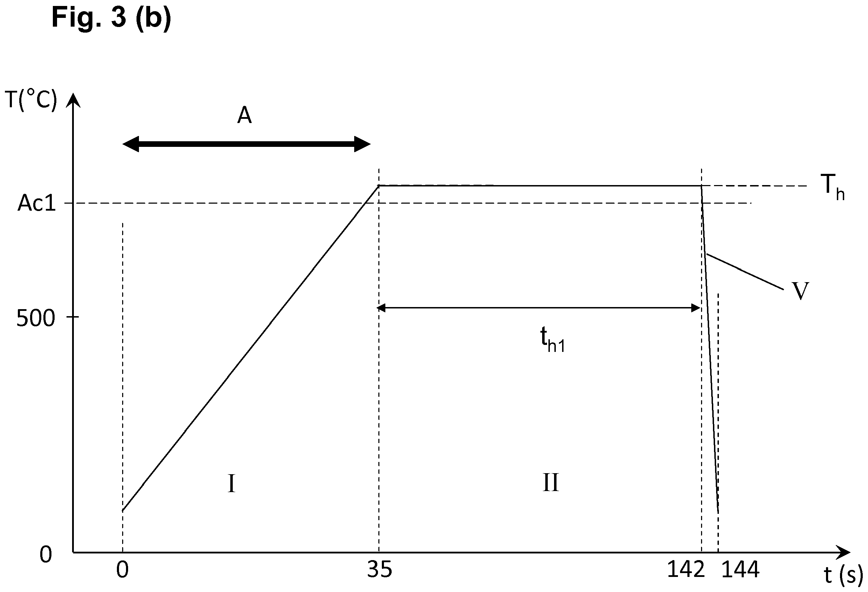

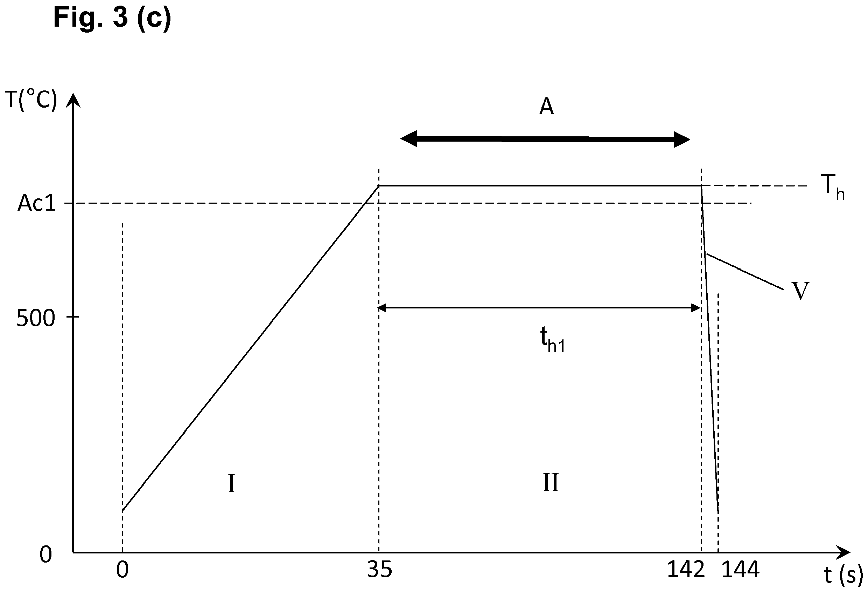

Zur Wiederherstellung des beim Kaltwalzen des Stahlprodukts zerstörten Kristallgefüges des Stahls muss das kaltgewalzte Stahlband rekristallisierend geglüht werden. Dies erfolgt gemäß der Erfindung durch Durchleiten des kaltgewalzten Stahlbands durch einen Glühofen, der zweckmäßig als Durchlaufglühofen ausgebildet ist, durch den das hierfür zweckmäßig als Stahlband vorliegende Stahlflachprodukt mit einer Geschwindigkeit von mehr als 200 m/min durchgeführt wird. In dem Glühofen wird das im Folgenden als Stahlband bezeichnete Stahlflachprodukt auf Temperaturen oberhalb des Rekristallisationspunkts des Stahls und zumindest kurzzeitig oberhalb der Acl-Temperatur erhitzt. In dem erfindungsgemäßen Verfahren erfolgt gleichzeitig mit dem Rekristallisationsglühen ein Aufsticken des Stahlbands. Dies wird ebenfalls in dem Glühofen durchgeführt, indem in den Glühofen ein stickstoffhaltiges Gas, bevorzugt Ammoniak (NH₃) eingebracht und auf die Oberfläche des Stahlbands geleitet wird. Um in dem Glühofen sowohl für das Rekristallisationsglühen als auch für das Aufsticken optimale (Temperatur-) Bedingungen zu schaffen, wird das Stahlband in dem Glühofen einem Glühzyklus (Glühprozess mit zeitlich wechselndem Temperaturverlauf des Stahlbands) unterworfen. Bevorzugte Glühzyklen werden nachfolgend unter Bezugnahme auf Figur 3 erläutert:

In Figur 3 (a) ist ein erstes Ausführungsbeispiel für einen geeigneten Glühzyklus in Form des zeitlichen Verlaufs der Temperatur (T) des durch den Glühofen geführten Stahlbands dargestellt. Das Stahlband wird bei diesem Glühzyklus in dem Glühofen zunächst in einem ersten Erhitzungsschritt I von Raumtemperatur auf eine Haltetemperatur (Tₕ) erhitzt. Die Erhitzung des Stahlbands in dem ersten Erhitzungsschritt erfolgt dabei durch Wärmestrahlung in dem aufgeheizten Glühofen mit einer (vergleichsweise geringen) Aufheizrate von 15 bis 25 K/s und insbesondere von ca. 20 K/s. Die Haltetemperatur (Tₕ) liegt dabei zweckmäßig knapp oberhalb der Rekristallisationstemperatur des Stahls und bevorzugt im Bereich von 600°C bis 650°C. Die Temperatur des Stahlbands wird in einem sich an den ersten Erhitzungsschritt I anschließenden Halteschritt II auf der Haltetemperatur (Tₕ) über eine erste Haltezeit (tₕ₁) von ca. 60 bis 200 Sekunden und bevorzugt von 80 bis 150 Sekunden, insbesondere von ca. 100 bis 110 Sekunden, gehalten. Während des Halteschritts II wird das Stahlband in einer Aufstickphase A, bevorzugt über die gesamte Haltezeit (tₕ₁), mit einem stickstoffhaltigen Gas beaufschlagt, um das Stahlband aufzusticken (d.h. die Konzentration von ungebundenem Stickstoff im Stahl auf Werte oberhalb von 100 ppm und bevorzugt von mehr als 210 ppm zu erhöhen). Nach Beendigung der ersten Haltezeit (tₕ₁) wird das Stahlband in einem zweiten (kurzen) Erhitzungsschritt III sehr schnell (bevorzugt innerhalb einer kurzen Aufheizzeit zwischen ca. 0,1 s und 10), mit einer Aufheizrate von mehr als 100 K/s und bevorzugt von mehr als 500 K/s auf eine Temperatur oberhalb der Acl-Temperatur des Stahls erhitzt, insbesondere auf Temperaturen im Bereich von 725°C bis 800°C. Der zweite Erhitzungsschritt III wird dabei innerhalb des Glühofens durch induktives oder konduktives Erhitzen des Stahlbands durchgeführt. Hierfür ist innerhalb des Glühofens eine Induktions- oder eine Konduktionsheizung angeordnet, durch welche das Stahlband in dem zweiten Erhitzungsschritt III geführt wird.An den zweiten Erhitzungsschritt III schließt sich ein kurzer zweiter Halteschritt IV an, in dem das Stahlband durch die Induktions- oder eine Konduktionsheizung geführt und seine Temperatur über eine (kurze) zweite Haltezeit (tₕ₂), welche im Bereich von wenigen Sekunden (bspw. zwischen 0,1 und 10 Sekunden und insbesondere bei ca. 2 Sekunden) liegt, oberhalb der Acl-Temperatur gehalten wird.

Nach dem Glühen wird das Stahlband aus dem Glühofen herausgeführt und in einem Kühlschritt V außerhalb des Glühofens mit einer Kühlrate von wenigstens 100 K/s auf Raumtemperatur abgekühlt. Der Kühlschritt V schließt sich dabei unmittelbar an die (kurze) zweite Haltezeit (tₕ₂) an. Die Abkühlung kann dabei bspw. mittels eines kalten Gasstroms erfolgen, der auf die Oberfläche des Stahlbands gerichtet wird, oder durch Einleiten des Stahlbands in eine Kühlflüssigkeit, bspw. in ein Wasserbad. Bei Verwendung einer Kühlflüssigkeit können höhere Kühlraten im Bereich von >> 1000 K/s erzielt werden. Das Abschrecken des Stahlbands mit einer Kühlflüssigkeit ist allerdings apparativ aufwendiger.

Das zumindest kurzzeitige Erhitzen des Stahlflachprodukts auf Temperaturen oberhalb der Acl-Temperatur (ca. 723°C) gewährleistet bei dem Glühzyklus der Figur 3a, dass der Stahl in das 2-Phasengebiet kommt (alpha- und gamma-Eisen), was wiederum beim anschließenden (schnellen) Abkühlen ermöglicht, ein Mehrphasengefüge auszubilden. Gleichzeitig kann das Aufsticken in diesem Glühzyklus während des ersten Halteschritts II bei wesentlichen niedrigeren Temperaturen (im Bereich von 600°C bis 650°C) aufgestickt werden, was eine höhere Effizienz des Aufstickens und einen niedrigeren Verbrauch an stickstoffhaltigem Gas ermöglicht.

In den Figuren 3 (b) und 3 (c) sind zwei weitere Ausführungsbeispiele für geeignete Glühzyklen dargestellt. Bei diesen Glühzyklen wird das Stahlband in dem Glühofen zunächst in einem (einzigen) Erhitzungsschritt I von Raumtemperatur auf eine Haltetemperatur (Tₕ) erhitzt, wobei die Haltetemperatur (Tₕ) - anders beim ersten Ausführungsbeispiel von Figur 3 (a) - dabei oberhalb der Acl-Temperatur des Stahls liegt und bevorzugt im Bereich von 740°C bis 800°C ist. Die Erhitzung des Stahlbands in dem (einzigen) Erhitzungsschritt I erfolgt dabei wiederum durch Wärmestrahlung in dem aufgeheizten Glühofen mit einer (vergleichsweise geringen) Aufheizrate von 15 bis 25 K/s und insbesondere von ca. 20 K/s. Die Temperatur des Stahlbands wird in einem sich an den (einzigen) Erhitzungsschritt I anschließenden Halteschritt II auf der Haltetemperatur (Tₕ > Ac1) über eine Haltezeit (tₕ₁) von ca. 60 bis 200 Sekunden und bevorzugt von 80 bis 150 Sekunden gehalten. Anschließend wird das Stahlband - wie beim Ausführungsbeispiel von Figur 3 (a) - in dem Glühofen in einem Kühlschritt V mit einer Kühlrate von wenigstens 100 K/s auf Raumtemperatur abgekühlt. Der Kühlschritt V schließt sich dabei unmittelbar an den Halteschritt II an.

In dem Glühzyklus gem. Figur 3 (b) wird das Stahlband bereits während des (einzigen) Erhitzungsschritt I mit einem stichstoffhaltigen Gas beaufschlagt. Die Aufstickphase A fällt bei diesem Glühzyklus also mit der Erhitzung des Stahlbands im (einzigen) Erhitzungsschritt I zusammen. Bevorzugt wird das Stahlband zumindest im Wesentlichen über die gesamte Aufheizzeit des Erhitzungsschritts I mit einem stickstoffhaltigen Gas beaufschlagt, um das Stahlband aufzusticken.

Im Gegensatz dazu wird das Stahlband in dem Glühzyklus gem. Figur 3 (c) erst während des Halteschritts II mit einem stichstoffhaltigen Gas beaufschlagt. Die Aufstickphase A fällt bei diesem Glühzyklus also mit dem Halteschritt II zusammen.

Es hat sich gezeigt, dass es vorteilhaft ist, im Anschluss an die Begasung mit einem stickstoffhaltigen Gas (bspw. NH₃-Behandlung) das Stahlband über eine Haltezeit von bevorzugt mehr als 5 Sekunden auf Temperaturen oberhalb von 600 °C zu halten, bevor es abgekühlt wird. Dadurch kommt es zu einer Homogenisierung der Stickstoffverteilung über den Querschnitt des Stahlbands und dadurch zu verbesserten Umformeigenschaften des Stahlbands. Insbesondere kann dadurch auch ein Dehnungsabfall bei einer Lackalterung vermieden werden. Deshalb werden die Glühzyklen gem. den Figuren 3 (a) und 3 (b) bevorzugt, und im Glühzyklus gemäß Figur 3 (c) wird die Aufstickphase zweckmäßig vor dem Ende der Haltezeit beendet.

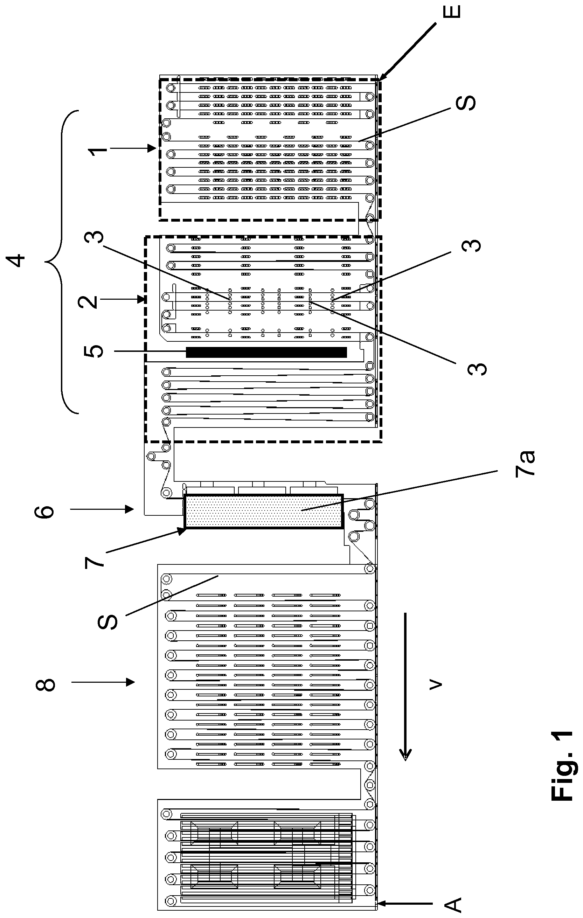

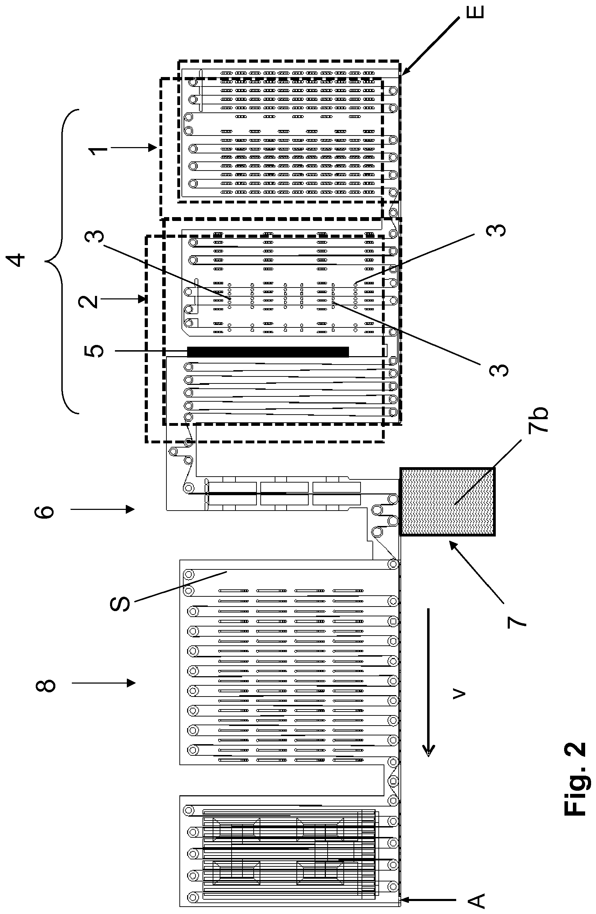

In den Figuren 1 und 2 sind schematisch zwei Ausführungsbeispiele eines Durchlaufglühofens zur Durchführung des Rekristallisationsglühens und des Aufstickens gezeigt, welche sich (nur) durch die Ausbildung der Kühleinrichtung voneinander unterscheiden. In dem Durchlaufglühofen sind jeweils zwischen einem Eingang E und einem Ausgang A verschiedene Zonen ausgebildet, die in Durchlaufrichtung (Bandlaufrichtung v, in Figur 1 von rechts nach links) des durch den Durchlaufglühofen geführten Stahlbands S hintereinander angeordnet sind. In den einzelnen Zonen wird das durchlaufende Stahlband S auf unterschiedliche Temperaturen gebracht, um die oben beschriebenen Glühzyklen zu durchlaufen.

In den Ausführungsbeispielen der Figuren 1 und 2 schließt sich an den Eingang E des Durchlaufglühofens eine Heizzone 1 an, in der das Stahlband S zumindest im vorderen Bereich (nur) durch Wärmestrahlung mit einer Aufheizrate von bis zu 25 K/s und - je nach ausgewähltem Glühzyklus - auf Temperaturen knapp unterhalb oder knapp oberhalb der Acl-Temperatur und insbesondere im Bereich von 600°C bis 800°C erhitzt wird. An die Heizzone 1 schließt sich eine Haltezone 2 an, in der die Temperatur des Stahlbands S auf der - je nach ausgewähltem Glühzyklus unterhalb oder oberhalb der Ac1-Temperatur liegenden - Haltetemperatur (Tₕ) gehalten wird.

In der Haltezone 2 ist eine Begasungszone 4 ausgebildet, in welcher das durchlaufende Stahlband mit einem stickstoffhaltigen Gas beaufschlagt wird. Die Begasungszone 4 weist mehrere Kaskaden 3 von Sprühdüsen auf, die in Bandlaufrichtung hintereinander angeordnet sind. In dem Ausführungsbeispiel der Figur 1 sind die Sprühdüsen-Kaskaden 3 (nur) im Bereich der Haltezone 2 angeordnet. Sie können jedoch auch im Bereich der Heizzone 1 angeordnet sein, so dass sich Begasungszone 4 entweder nur in der Heizzone 1 oder über die Heizzone 1 und die Haltezone 2 erstreckt. Für die Durchführung des Glühzyklus gemäß Figur 3 (b) sind die Sprühdüsen-Kaskaden 3 zweckmäßig in der Heizzone 1 angeordnet. Für die Durchführung des Glühzyklus gemäß den Figuren 3 (a) und 3 (c) sind die Sprühdüsen-Kaskaden 3 zweckmäßig in der Haltezone 2 angeordnet. Für die Durchführung des Glühzyklus gemäß Figur 2 (a) ist im stromabwärtigen Bereich der Haltezone 2 zusätzlich noch eine Induktions- oder Konduktionsheizung 5 angeordnet.

Jede Sprühdüsen-Kaskade 3 umfasst dabei eine Mehrzahl von Düsen, die quer zur Bandlaufrichtung im Abstand zueinander angeordnet sind. Die Düsen sind mit einer Gaszufuhrleitung verbunden, über welche sie mit einem stickstoffhaltigen Gas beaufschlagt werden. Als für das Aufsticken des Stahlbands besonders geeignetes Gas hat sich Ammoniakgas erwiesen. Dieses wird über die Düsen der Kaskaden 3 auf die Oberflächen des durchlaufenden Stahlbands S aufgebracht, wo es in den oberflächennahen Bereich des Stahlbands eindringt und dort - bei den hohen Temperaturen im Glühofen - gleichmäßig in die Tiefe des Stahlbands diffundiert. Es bildet sich deshalb über die Dicke des Stahlbands eine gleichmäßig homogene Stickstoffverteilung aus, deren Konzentrationsverteilung über die Blechdicke bei Stahlblechen mit einer Dicke von weniger als 0,4 mm um höchstens ± 10 ppm und regelmäßig um lediglich ± 5 ppm um den Mittelwert schwankt.

Die Ausbildung von bevorzugt verwendeten Düsen der Sprühdüsen-Kaskaden 3 ist in der deutschen Patentanmeldung DE 102014106135 vom 30.4.2014 beschrieben, deren Offenbarungsgehalt diesbezüglich hiermit einbezogen wird. In dieser Patentanmeldung ist eine Düseneinrichtung zur Behandlung eines Stahlflachprodukts beschrieben, wobei die Düseneinrichtung ein Außenrohr und ein darin angeordnetes Innenrohr mit einer Primäröffnung zum Einspeisen eines die Düseneinrichtung durchströmenden Gases in das Außenrohr umfasst und das Außenrohr mit einer Sekundäröffnung versehen ist, durch die das Gas austreten kann. Die Primäröffnung des Innenrohrs und die Sekundäröffnung des Außenrohrs sind dabei versetzt zueinander angeordnet. Dadurch wird ein sehr homogener Gasfluss auf die Oberfläche des Stahlflachprodukts ermöglicht. Bei der Verwendung einer solchen Düseneinrichtung in dem erfindungsgemäßen Verfahren kann eine homogene Begasung der Oberfläche des Stahlbands in dem Durchlaufglühofen mit dem stickstoffhaltigen Gas (bspw. Ammoniak) erzielt werden, wodurch über die Oberfläche des Stahlbands, insbesondere über dessen Breite hinweg, eine homogene Eindiffusion von Stickstoff in das Stahlblech erzielt werden kann, der sich dort interstitiell anlagert.

Das Verfahren der Direktbeaufschlagung des Stahlbands (Begasung) mit einem stickstoffhaltigen Gas mittels Düsen hat dabei zwei wesentliche Vorteile: Zum einen wird nur eine geringe Stickstoffkonzentration (NH₃-Konzentration) benötigt, was zu einem geringen Verbrauch an stickstoffhaltigem Gas (bspw. NH₃-Verbrauch) führt. Zum anderen erfolgt durch eine sehr kurze Einwirkungszeit keine Bildung einer Nitridschicht.

Um auch über die Länge des Stahlbands S eine möglichst homogene Ausbildung einer stickstoffangereicherten Oberflächenschicht zu gewährleisten, ist während der Durchführung des Stahlbands S durch die Begasungszone 4 des Durchlaufglühofens eine stickstoffhaltige Atmosphäre mit einer möglichst gleichbleibenden Stickstoff-Gleichgewichtskonzentration einzuhalten. Um dies sicher zu stellen, wird im Bereich der Sprühdüsen-Kaskaden 3 die ausgebildete Stickstoffkonzentration erfasst. Bei Verwendung von Ammoniak als stickstoffhaltiges Gas wird hierzu die in der Begasungszone 4 durch das Einleiten von Ammoniak erzeugte Ammoniakkonzentration gemessen. Hierfür ist ein außerhalb des Durchlaufglühofens angeordneter Konzentrationssensor vorgesehen, bei dem es sich bspw. um einen Laserspektroskopie-Sensor handeln kann. Diesem wird eine aus der Begasungszone 4 entnommene Gasprobe zugeführt, um die Ammoniakkonzentration und daraus die Stickstoffkonzentration der Gasatmosphäre in der Begasungszone zu erfassen. Die vom Konzentrationssensor erfasste Konzentration des Stickstoffs in der Gasatmosphäre der Begasungszone 4 wird einer Steuereinrichtung zugeführt und von dieser verwendet, um die Menge des über die Düsen der Kaskaden 3 in die Begasungszone 4 eingesprühten stickstoffhaltigen Gases (Ammoniak) konstant auf einem vorgegebenen Zielwert zu halten. Als besonders zweckmäßig haben sich bei Verwendung von Ammoniak als stickstoffhaltigem Gas Zielwerte für die Gleichgewichtskonzentration des Ammoniak im Bereich von 0,05 bis 1,5 % und bevorzugt von unter 1 %, insbesondere unter 0,2 % erwiesen. Bevorzugt liegt die Gleichgewichtskonzentration des Ammoniak im Bereich von 0,1 bis 1,0 % und besonders bevorzugt zwischen 0,1 und 0,2 %. Diese niedrigen Ammoniak- bzw. Stickstoffkonzentrationen in dem Glühofen reichen aus, um in das Stahlflachprodukt während des Aufstickens bei Temperaturen im Bereich von 600 bis 650°C die gewünschten Mengen an Stickstoff einzulagern. Bei höheren Temperaturen, insbesondere oberhalb von 700°C, wie sie bspw. bei dem Glühzyklus von Figur 3c während des Aufstickens auftreten, müssen dann höhere Ammoniak-Konzentrationen in dem Glühofen bis zu 15 Gew.% erzeugt werden, um zu den gewünschten Aufstickmengen zu gelangen.

Zur Vermeidung von Oxidationsprozessen an der Oberfläche des Stahlbands S wird zweckmäßig in der Begasungszone 4 neben dem stickstoffhaltigen Gas (Ammoniak) noch ein Inertgas in den Glühofen eingebracht. Dabei kann es sich bspw. um Stickstoffgas oder/oder Wasserstoffgas handeln. Bevorzugt wird ein Gemisch von ca. 95% Stickstoff- und ca. 5% Wasserstoffgas verwendet.

In Bandlaufrichtung v nach der Haltezone 2 (und ggf. nach der am Ende der Haltezone 2 angeordneten Induktions- oder Konduktionsheizung 5) ist eine erste Kühlzone 6 vorgesehen, in der das durchlaufende Stahlband S mit einer Kühlrate von wenigstens 100 K/s schnell abgekühlt wird. Die erste Kühlzone 6 enthält dafür eine Kühleinrichtung 7, welche in dem Ausführungsbeispiel der Figur 1 als Gaskühleinrichtung 7a ausgebildet ist, in der das Stahlband mit einem kalten Gasstrom, insbesondere mit einem Inertgas, beaufschlagt wird. In dem Ausführungsbeispiel der Figur 2 ist die Kühleinrichtung 7 als Flüssigkeitskühleinrichtung ausgebildet, in der das Stahlband durch Einleiten in eine Kühlflüssigkeit, insbesondere ein Wasserbad 7b, abgeschreckt wird. Mit der Gaskühleinrichtung können Kühlraten im Bereich von 100 bis 1000 K/s erzielt werden. Mit der Flüssigkeitskühleinrichtung sind noch wesentlich höhere Kühlraten (weit oberhalb von 1000 K/s) erzielbar. In der Kühleinrichtung 7, welche in der inerten Atmosphäre des Glühofens angeordnet ist, wird das Stahlband S zunächst schnell auf eine Temperatur abgekühlt, welche höher als Raumtemperatur ist, bspw. auf Temperaturen um 100°C. An die erste Kühlzone 6 schließt sich stromabwärts zweckmäßig noch eine zweite Kühlzone 8 an, in der das durchlaufende Stahlband S schließlich langsam bei einer Kühlrate im Bereich von 10 bis 20 K/s auf Raumtemperatur (23°C) abgekühlt wird. Danach wird das Stahlband S am Ausgang A aus dem Glühofen herausgeführt. Zwischen dem Eingang E und dem Ausgang A befindet sich das Stahlband S dauernd in der inerten Atmosphäre des Glühofens, so dass es während des Rekristallisationsglühens, des Aufstickens und dem Abkühlen nicht zu Oxidationsprozessen an der Oberfläche des Stahlbands S kommen kann.

Nach dem Abkühlen kann das Stahlband S erforderlichenfalls noch trocken nachgewalzt (dressiert) werden, um dem Band die für die Herstellung von Verpackungen erforderlichen Umformeigenschaften zu verleihen. Der Nachwalzgrad variiert dabei je nach Verwendungszweck des Verpackungsstahls zwischen 0,4 und 2 %. Erforderlichenfalls kann das Stahlband auch nass nachgewalzt werden, um eine weitere Dickenreduktion um bis zu 43% zu erzeugen (doppelt reduziertes Stahlband, "double reduced DR"). Beim Nachwalzen tritt noch eine zusätzliche Erhöhung der Festigkeit ein. Anschließend wird das Stahlband S ggf. einer Beschichtungsanlage zugeführt, in der die Oberfläche des Stahlbands zur Erhöhung der Korrosionsbeständigkeit bspw. elektrolytisch mit einer Zinn- oder einer Chrom/Chromdioxidbeschichtung (ECCS) oder einer Lackierung versehen wird. Bei einer Lackierung der Oberfläche des Verpackungsstahls erfolgt üblicherweise ein Einbrennen des Lacks durch eine Erwärmung des lackierten Verpackungsstahls, wobei durch diesen Einbrennvorgang eine als "Lackalterung" bekannte zusätzliche Festigkeitssteigerung zu beobachten ist. Es hat sich gezeigt, dass mit dem erfindungsgemäßen Verfahren hergestellte Verpackungsstähle nicht nur höhere Festigkeiten sondern auch in Bezug auf ihre Korrosionsbeständigkeit bessere Eigenschaften aufweisen als die bekannten Stahlflachprodukte.

Die erfindungsgemäße Wärmebehandlung im Glühofen führt zu der Ausbildung eines mehrphasigen Gefüges im Stahl des kaltgewalzten Stahlflachprodukts. Die Gefügezusammensetzung kann dabei über die Prozessparameter gesteuert werden. Es hat sich gezeigt, dass bei einem Glühen des Stahlflachprodukts (Stahlband S) oberhalb der Ac1-Temperatur und anschließender Schnellkühlung (Abschreckung) mit einer Kühlrate im Bereich von 100 K/s bis ca. 1000 K/s ein mehrphasiges Gefüge bestehend aus Ferrit und Troostit (feinstreifiger Perlit) entsteht. Wird das Stahlflachprodukt oberhalb der Ac1-Temperatur geglüht und anschließend mit einer sehr hohen Kühlrate von (weit) mehr als 1000 K/s abgeschreckt (bspw. durch Einleiten in eine Kühlflüssigkeit, insbesondere ein Wasserbad 7b, wie in Figur 2 gezeigt) entsteht dagegen ein Gefüge mit Ferrit und Martensit als wesentliche Gefügebestandteile, welches weitgehend dem aus dem Karosseriebau bekannten Dualphasengefüge entspricht. Sowohl das Mehrphasengefüge aus Ferrit und Troostit als auch das Mehrphasengefüge aus Ferrit und Martensit zeichnet sich gegenüber monophasigem Stahlgefüge durch eine erhöhte Festigkeit aus. Die hohe Festigkeit des erfindungsgemäß hergestellten Verpackungsstahl wird demnach einerseits durch den festigkeitssteigernden Gehalt an ungebundenem und durch das Aufsticken interstitiell eingelagerten Stickstoff und andererseits auch durch die Ausbildung eines mehrphasigen Gefüges bei der Wärmebehandlung im Glühofen erzielt.

Mit dem erfindungsgemäßen Verfahren lassen sich aufgestickte Stahlflachprodukte herstellen, die sich durch eine sehr hohe Festigkeit von mehr als 650 MPa bei gleichzeitig guter Bruchdehnung von mehr als 5% und insbesondere zwischen 7 und 15% sowie guten Umformeigenschaften auszeichnen. Die Festigkeitswerte des erfindungsgemäß hergestellten Verpackungsstahls werden ggf. bei einem Einbrennvorgang einer aufgebrachten Lacksicht noch weiter erhöht (Streckgrenzenzuwachs durch Lackalterung, auch als "bake hardening" bekannt), wobei Festigkeiten von bis zu 850 MPa erzielbar sind.

Die durch das Aufsticken erhöhte Festigkeit und die Bruchdehnung sind dabei sehr homogen über den Querschnitt des Stahlbands und zwar sowohl in als auch quer zur Walzrichtung des kaltgewalzten Stahlbands. Dies resultiert aus dem sehr homogenen Einbringen von ungebundenem Stickstoff in den Stahl beim Aufsticken im Glühofen. Schmelzanalysen an erfindungsgemäß hergestellten Stahlflachprodukten haben gezeigt, dass die durch das Aufsticken eingebrachte Stickstoffkonzentration über die Dicke des Stahlflachprodukts jedenfalls bei Feinstblechen nur in einem schmalen Band von höchstens ± 10 ppm und regelmäßig nur um ± 5 ppm um die mittlere Konzentration schwankt.

Das warmgewalzte Stahlprodukt, das als Ausgangsprodukt des erfindungsgemäßen Verfahrens verwendet wird, kann bereits einen Anteil von Stickstoff enthalten. Zur Herstellung eines entsprechenden Ausgangsprodukts wird (als erweitertes Ausführungsbeispiel der Erfindung) folgendes Verfahren durchgeführt:

In einem Konverter und/oder in einer folgenden Pfannenbehandlung wird zunächst eine aufgestickte Stahlschmelze erzeugt, welche einen Gehalt an freiem, ungebundenem (d.h. im Stahl gelösten) Stickstoff von bis zu 160 ppm aufweist. Die Legierungszusammensetzung des erzeugten Stahls erfüllt dabei zweckmäßig die durch Normen für Verpackungsstahl vorgegebenen Grenzwerte (wie z.B. in der Norm ASTM A623-11 "Standard Specification for Tin Mill Products" oder im "European Standard EN 10202" definiert), mit Ausnahme des oberen Grenzwerts für den Stickstoffgehalt (der in der Norm EN10202 bei Nₘₐₓ=80 ppm und in dem AST-Standard ASTM 623 bei_Nₘₐₓ=200 ppm liegt), der aufgrund der Aufstickung in dem erfindungsgemäßen Verfahren überschritten werden kann. Der Kohlenstoffanteil des erzeugten Stahls liegt dabei bevorzugt im Bereich von 400 bis 1200 ppm und besonders bevorzugt zwischen 600 und 900 ppm.

Zur Erzeugung der Stahlschmelze wird der Konverter mit Schrott und Roheisen gefüllt und die Schmelze wird mit Sauerstoffgas und Stickstoffgas geblasen, wobei das Sauerstoffgas (O2) von oben und Stickstoffgas (N2) mittels Bodendüsen von unten in den Konverter eingeblasen wird. Dadurch stellt sich ein Stickstoffgehalt in der Stahlschmelze von 70 bis 120 ppm ein, wobei es zu einer Sättigung kommt. Während der Herstellung der Stahlschmelze wird die Zusammensetzung und insb. der Stickstoffgehalt der Schmelze erfasst. Falls die vorgegebene Analyse nicht getroffen wurde (z.B. wenn der Anteil an Phosphor zu hoch ist) wird durch eine Sauerstofflanze Sauerstoffgas und durch die Bodendüsen Argongas (Ar) nachgeblasen. Da im Stahl kaum mehr Kohlenstoff (C) vorhanden ist, entsteht kein Überdruck und der Stickstoff der Luft wird mit eingezogen, wodurch es zu einer zusätzlichen Aufstickung kommen kann.

Falls die gewünschte Menge an (gelöstem) Stickstoff in der Stahlschmelze (welche regelmäßig bei ca. 120 ppm liegt) durch das Einblasen des Stickstoffgas noch nicht erreicht ist, kann beim Entleeren des Konverters (Abstich), zusätzlich noch Kalk-Stickstoff (Calcium Cyanamid, CaCN2) in den aus dem Konverter austretenden Stahlstrahl gegeben werden. Der Kalk-Stickstoff wird dabei bspw. in Form eines Granulats (5-20 mm) zugegeben.

Anschließend kommt die Pfanne zur ersten Argonspüle, wo mit einer feuerfesten, eingetauchten Lanze mit Argon für ca. 3 Minuten gespült wird. Nach einer Kontrollanalyse wird ggf. ein zweites Mal in einer zweiten Argonspüle für ca. 3 Minuten gespült. Die Pfanne kommt dann zu einer dritten Argon-Spüle. Dies stellt die letzte Stufe vor dem Gießen dar. Falls der Stickstoffgehalt nicht im vorgegebenen Zielbereich liegt, kann in der dritten Argon-Spüle Mangannitrid (MnN), bspw. in Form eines Drahts von MnN-Pulver in einer Stahlhülle), hinzugefügt werden. Die Menge an ggf. fehlendem Stickstoff wird dabei in eine erforderliche Menge an MnN umgerechnet (bspw. in ein erforderliche Länge des MnN-Draht), die in die Schmelze gegeben wird. Das MnN wird solange zugegebenen, bis der vorgegebene Stickstoff-Zielgehalt oder eine Mn-Obergrenze des Stahls erreicht wird.

Schließlich wird die Schmelze in eine Verteilerrinne gegeben, um aus der Stahlschmelze eine Bramme zu gießen. Bedingt durch Undichtigkeiten und Eindiffusion von Luftstickstoff kann der Stickstoffgehalt dabei um ca. 10 ppm ansteigen. Eine Obergrenze der Menge an gelöstem Stickstoff in der gegossenen Stahlbramme von ca. 160 ppm sollte nicht überschritten werden, weil sich bei höheren Stickstoffgehalten Defekte an der Bramme wie Risse oder Poren bilden können, welche zu einer unerwünschten Oxidation führen.

Die aus der Stahlschmelze gegossene Bramme wird danach warmgewalzt und auf Raumtemperatur abgekühlt. Das erzeugte Warmband weist dabei Dicken im Bereich von 1 bis 4 mm auf und wird ggf. zu einer Rolle (Coil) aufgewickelt. Zur Herstellung eines Verpackungsstahls in Form eines Stahlflachprodukts in den üblichen Fein- und Feinstblechdicken muss das Warmband kaltgewalzt werden, wobei eine Dickenreduktion im Bereich von 50 bis über 90 % erfolgt. Unter Feinblech wird dabei ein Blech mit einer Dicke von weniger als 3 mm verstanden und ein Feinstblech weist eine Dicke von weniger als 0,5 mm auf. Für die Durchführung des Kaltwalzens wird das ggf. als Rolle aufgewickelte Warmband von der Rolle abgewickelt, gebeizt und in eine Kaltwalzvorrichtung, bspw. eine Kaltwalzstraße, eingeführt. Das kaltgewalzte und bereits auf Stickstoffkonzentrationen von bis zu 160 ppm aufgestickte Stahlflachprodukt wird dann als Ausgangsprodukt für die weitere Behandlung gem. dem erfindungsgemäßen Verfahren verwendet, in dem das kaltgewalzte Stahlflachprodukt in dem Glühofen rekristallisierend geglüht und gleichzeitig noch weiter aufgestickt wird, um die Stickstoffkonzentration auf Werte oberhalb von 100 ppm und bevorzugt auf mehr als 150 ppm zu erhöhen.

## Patentansprüche

1. Verfahren zur Herstellung eines aufgestickten Verpackungsstahls aus einem warmgewalzten Stahlprodukt mit einem Kohlenstoffgehalt von 0,04 bis 0,12 Gew.%, sowie folgenden Obergrenzen für den Gewichtsanteil der Legierungsbestandteile:
| | |
|---|---|
| - Mn: | max. 0,4 %, |
| - Si: | max. 0,04 %, |
| - Al: | max. 0,1 %, |
| - Cr: | max. 0,1 %, |
| - P: | max. 0,03 %, |
| - Cu: | max. 0,1 %, |
| - Ni: | max. 0,15 %, |
| - Sn: | max. 0,04 %, |
| - As: | max. 0,02 %, |
| - S: | max. 0,03%, |
| - Mo: | max. 0,05 %, |
| - V: | max. 0,04 %; |
| - Ti: | max. 0,05 %, |
| - Nb: | max. 0,05 %, |
| - B: | max. 0,005 %; |
- andere Legierungsbestandteile, einschl. Verunreinigungen: max. 0,05 % und Rest Eisen, **gekennzeichnet durch** folgende Schritte:
- Kaltwalzen des Stahlprodukts zu einem Stahlflachprodukt;
- rekristallisierendes Glühen des kaltgewalzten Stahlflachprodukts in einem Glühofen, insbesondere einem Durchlaufglühofen, wobei in den Glühofen ein stickstoffhaltiges Gas eingeleitet und auf das Stahlflachprodukt gerichtet wird, um ungebundenen Stickstoff in das Stahlflachprodukt in einer Menge entsprechend einer Konzentration von mehr als 0,021 Gew.% einzubringen oder die Menge von ungebundenem Stickstoff im Stahlflachprodukt auf eine Konzentration von mehr als 0,021 Gew.% zu erhöhen;
- Abkühlen des rekristallisierend geglühten Stahlflachprodukts auf Raumtemperatur mit einer Kühlrate von wenigstens 100 K/s unmittelbar nach dem rekristallisierenden Glühen.

2. Verfahren nach Anspruch 1, wobei es sich bei dem Stahlprodukt um einen warmgewalzten und durch Nitrieren einer Stahlschmelze auf einen Stickstoffgehalt von maximal 160 ppm aufgestickten Stahl handelt.

3. Verfahren nach Anspruch 2, **dadurch gekennzeichnet, dass** das Nitrieren der Stahlschmelze durch Einleiten eines stickstoffhaltigen Gases und/oder eines stickstoffhaltigen Feststoffs in die Stahlschmelze erfolgt, insbesondere durch Einleiten von Stickstoffgas (N₂) und/oder Kalkstickstoff (CaCN₂) und/oder Manganstickstoff (MnN) in die Stahlschmelze.

4. Verfahren nach einem der voranstehenden Ansprüche, **dadurch gekennzeichnet, dass** während des rekristallisierenden Glühens des kaltgewalzten Stahlflachprodukts Ammoniakgas (NH₃) in den Glühofen eingeleitet und bevorzugt mittels wenigstens einer Sprühdüse auf das Stahlflachprodukt gerichtet wird.

5. Verfahren nach Anspruch 4, **dadurch gekennzeichnet, dass** sich in dem Glühofen durch das Einleiten des Ammoniakgases (NH₃) ein Ammoniakgleichgewicht mit einer Konzentration von weniger als 15 Gew. % und bevorzugt im Bereich von 0,05 bis 1,5 Gew. % einstellt.

6. Verfahren nach einem der Ansprüche 4 oder 5, **dadurch gekennzeichnet, dass** die sich in dem Glühofen durch das Einleiten des Ammoniakgases (NH₃) einstellende Ammoniak-Gleichgewichtskonzentration mit einem Ammoniaksensor erfasst und der erfasste Messwert der Ammoniak-Gleichgewichtskonzentration für eine Regelung der pro Zeiteinheit in den Glühofen eingeleiteten Menge an Ammoniakgas verwendet wird.

7. Verfahren nach einem der voranstehenden Ansprüche, **dadurch gekennzeichnet, dass** die Menge an ungebundenem Stickstoff nach dem Nitrieren des kaltgewalzten Stahlflachprodukts im Glühofen zwischen 210 und 500 ppm, bevorzugt zwischen 210 und 350 ppm beträgt.

8. Verfahren nach einem der voranstehenden Ansprüche 1 bis 6, **dadurch gekennzeichnet, dass** die Konzentrationsverteilung des ungebundenen Stickstoffes in dem aufgestickten Stahlflachprodukt über die Dicke des Stahlflachprodukts um weniger als ± 10 ppm um den Wert der mittleren Konzentration (Menge) des eingebrachten Stickstoffs schwankt, wobei die mittlere Konzentration (Menge) an ungebundenem Stickstoff bevorzugt zwischen 210 und 350 ppm liegt.

9. Verfahren nach einem der voranstehenden Ansprüche, **dadurch gekennzeichnet, dass** das rekristallisierende Glühen des kaltgewalzten Stahlflachprodukts mittels Durchleiten des Stahlflachprodukts durch einen Durchlaufglühofen erfolgt, in dem das Stahlflachprodukt zumindest kurzzeitig auf Temperaturen oberhalb der Acl-Temperatur erhitzt wird.

10. Verfahren nach einem der voranstehenden Ansprüche, **dadurch gekennzeichnet, dass** das kaltgewalzte Stahlflachprodukt in dem Glühofen zunächst in einem ersten Erhitzungsschritt auf eine Haltetemperatur (Tₕ) unterhalb der Acl-Temperatur und insbesondere im Bereich von 600°C bis 650°C erhitzt und in einem anschließenden Halteschritt auf dieser Haltetemperatur (Tₕ) gehalten wird, um das kaltgewalzte Stahlflachprodukt bei der Haltetemperatur (Tₕ) zum Aufsticken mit dem stickstoffhaltigen Gas zu beaufschlagen.

11. Verfahren nach einem der Ansprüche 1 bis 9, **dadurch gekennzeichnet, dass** das kaltgewalzte Stahlflachprodukt in dem Glühofen zunächst in einem ersten Erhitzungsschritt auf eine Haltetemperatur (Tₕ) oberhalb der Acl-Temperatur und insbesondere im Bereich von 740°C bis 760°C erhitzt und in einem anschließenden Halteschritt auf dieser Haltetemperatur (Tₕ) gehalten wird, wobei das kaltgewalzte Stahlflachprodukt während des Erhitzungsschritts und/oder während des Halteschritts zum Aufsticken mit dem stickstoffhaltigen Gas beaufschlagt wird.

12. Verfahren nach Anspruch 11, **dadurch gekennzeichnet, dass** das kaltgewalzte Stahlflachprodukt unmittelbar nach dem Aufsticken im Glühofen in einem zweiten Erhitzungsschritt auf eine Glühtemperatur (T_{g}) oberhalb der Ac1-Temperatur und insbesondere zwischen 740°C ≤ T_{g} ≤ 760°C erhitzt und anschließend mit einer Kühlrate von mehr als 100 K/s abgekühlt wird.

13. Verfahren nach einem der Ansprüche 10 bis 12, **dadurch gekennzeichnet, dass** das kaltgewalzte Stahlflachprodukt in dem ersten Erhitzungsschritt von Umgebungstemperatur auf die Haltetemperatur (Tₕ) mit einer Aufheizrate von 15 bis 25 K/s und insbesondere von 20 K/s erhitzt wird.

14. Verfahren nach Anspruch 12, **dadurch gekennzeichnet, dass** das kaltgewalzte Stahlflachprodukt in dem zweiten Erhitzungsschritt von der Haltetemperatur (Tₕ) auf die Glühtemperatur (T_{g}) mit einer Aufheizrate von mehr als 100 K/s erhitzt wird, wobei das Erhitzen in dem zweiten Erhitzungsschritt bevorzugt mit einer Aufheizrate von mehr als 150 K/s und insbesondere induktiv mit einer Aufheizrate zwischen 500 K/s und 1500 K/s erfolgt.

15. Kaltgewalztes Stahlflachprodukt zur Verwendung als Verpackungsstahl und insbesondere hergestellt mit dem Verfahren nach einem der voranstehenden Ansprüche, mit einem Kohlenstoffgehalt von 0,04 bis 0,12 Gew.%, einem Gewichtsanteil von ungebundenem Stickstoff von mehr als 0,021 Gew.% sowie folgenden Obergrenzen für den Gewichtsanteil der Legierungsbestandteile:
| | |
|---|---|
| - Mn: | max. 0,4 %, |
| - Si: | max. 0,04 %, bevorzugt weniger als 0,02 %; |
| - Al: | max. 0,1 %, bevorzugt weniger als 0,08 %; |
| - Cr: | max. 0,1 %, bevorzugt weniger als 0,08 %; |
| - P: | max. 0,03 %, bevorzugt weniger als 0,02 %; |
| - Cu: | max. 0,1 %, bevorzugt weniger als 0,08 %; |
| - Ni: | max. 0,15 %, bevorzugt weniger als 0,08 %; |
| - Sn: | max. 0,04 %, bevorzugt weniger als 0,02 %; |
| - As: | max. 0,02 %, |
| - S: | max. 0,03%, bevorzugt weniger als 0,02 %; |
| - Mo: | max. 0,05 %, bevorzugt weniger als 0,02 %; |
| - V: | max. 0,04 %; |
| - Ti: | max. 0,05 %, bevorzugt weniger als 0,02 %; |
| - Nb: | max. 0,05 %, bevorzugt weniger als 0,02 %; |
| - B: | max. 0,005 %; |
andere Legierungsbestandteile, einschl. Verunreinigungen: max. 0,05 % und Rest Eisen, wobei das Stahlflachprodukt ein mehrphasiges Gefüge, das Ferrit und mindestens einen der Gefügebestandteile Martensit, Bainit und/oder Troostit sowie ggf. Restaustenit umfasst, sowie eine Zugfestigkeit von mehr als 650 MPa und eine Bruchdehnung von mehr als 5% aufweist.

## Claims

1. Method for producing a nitrided packaging steel from a hot-rolled steel product having a carbon content of 0.04 to 0.12 wt.%, and the following upper limits for the weight content of the alloying constituents:
| | |
|---|---|
| - Mn: | maximum 0.4 %, |
| - Si: | maximum 0.04 %, |
| - Al: | maximum 0.1 %, |
| - Cr: | maximum 0.1 %, |
| - P: | maximum 0.03 %, |
| - Cu: | maximum 0.1 %, |
| - Ni: | maximum 0.15 %, |
| - Sn: | maximum 0.04 %, |
| - As: | maximum 0.02 %, |
| - S: | maximum 0.03 %, |
| - Mo: | maximum 0.05 %, |
| - V: | maximum 0.04 %; |
| - Ti: | maximum 0.05 %, |
| - Nb: | maximum 0.05 %, |
| - B: | maximum 0.005 %; |
- other alloying constituents, including contaminants: maximum 0.05 % and the remainder iron, **characterised by** the following steps:
- cold-rolling the steel product to form a flat steel product;
- recrystallisation annealing of the cold-rolled flat steel product in an annealing furnace, in particular a continuous annealing furnace, wherein a nitrogen-containing gas is introduced into the annealing furnace and directed onto the flat steel product in order to introduce uncombined nitrogen into the flat steel product in a quantity corresponding to a concentration of more than 0.021 wt.% or to increase the quantity of uncombined nitrogen in the flat steel product to a concentration of more than 0.021 wt.%;
- cooling-down of the flat steel product annealed with recrystallisation to room temperature at a cooling rate of at least 100 K/s immediately after recrystallisation annealing.

2. Method according to claim 1, wherein the steel product is a hot-rolled steel nitrided to a nitrogen content of maximum 160 ppm by nitriding a steel melt.

3. Method according to claim 2, **characterised in that** nitriding of the steel melt is effected by introducing a nitrogen-containing gas and/or a nitrogen-containing solid into the steel melt, in particular by introducing nitrogen gas (N₂) and/or calcium cyanamide (CaCN₂) and/or manganese nitride (MnN) into the steel melt.

4. Method according to one of the preceding claims, **characterised in that** during recrystallisation annealing of the cold-rolled flat steel product, ammonia gas (NH₃) is introduced into the annealing furnace and directed onto the flat steel product preferably by means of at least one spray nozzle.

5. Method according to claim 4, **characterised in that** an ammonia equilibrium with a concentration of less than 15 wt.% and preferably in the range from 0.05 to 1.5 wt.% is set in the annealing furnace by the introduction of ammonia gas (NH₃).

6. Method according to one of claims 4 or 5, **characterised in that** the ammonia equilibrium concentration being set in the annealing furnace by the introduction of ammonia gas (NH₃) is recorded using an ammonia sensor and the measured value of ammonia equilibrium concentration recorded is used for regulating the quantity of ammonia gas introduced into the annealing furnace per unit of time.

7. Method according to one of the preceding claims, **characterised in that** the quantity of uncombined nitrogen after nitriding the cold-rolled flat steel product in the annealing furnace is between 210 and 500 ppm, preferably between 210 and 350 ppm.

8. Method according to one of the preceding claims 1 to 6, **characterised in that** the concentration distribution of the uncombined nitrogen in the nitrided flat steel product over the thickness of the flat steel product varies by less than ± 10 ppm about the value of the average concentration (quantity) of nitrogen introduced, wherein the average concentration (quantity) of uncombined nitrogen preferably lies between 210 and 350 ppm.

9. Method according to one of the preceding claims, **characterised in that** recrystallisation annealing of the cold-rolled flat steel product is effected by means of passing the flat steel product through a continuous annealing furnace, in which the flat steel product is heated at least briefly at temperatures above the Ac1 temperature.

10. Method according to one of the preceding claims, **characterised in that** the cold-rolled flat steel product is heated in the annealing furnace first of all in a first heating step to a holding temperature (Tₕ) below the Ac1 temperature and in particular in the range from 600°C to 650°C and kept at this holding temperature (Tₕ) in a subsequent holding step in order to expose the cold-rolled flat steel product to nitriding with the nitrogen-containing gas at the holding temperature (Tₕ).

11. Method according to one of claims 1 to 9, **characterised in that** the cold-rolled flat steel product is heated in the annealing furnace first of all in a first heating step to a holding temperature (Tₕ) above the Ac1 temperature and in particular in the range from 740°C to 760°C and kept at this holding temperature (Tₕ) in a subsequent holding step, wherein the cold-rolled flat steel product is exposed to nitriding with the nitrogen-containing gas during the heating step and/or during the holding step.

12. Method according to claim 11, **characterised in that** the cold-rolled flat steel product is heated immediately after nitriding in the annealing furnace in a second heating step to an annealing temperature (Tₐ) above the Ac1 temperature and in particular between 740°C ≤ Tₐ ≤ 760°C and then cooled-down at a cooling rate of more than 100 K/s.

13. Method according to one of claims 10 to 12, **characterised in that** the cold-rolled flat steel product is heated in the first heating step from ambient temperature to the holding temperature (Tₕ) at a heating rate of 15 to 25 K/s and in particular of 20 K/s.

14. Method according to claim 12, **characterised in that** the cold-rolled flat steel product is heated in the second heating step from the holding temperature (Tₕ) to the annealing temperature (Tₐ) at a heating rate of more than 100 K/s, wherein the heating in the second heating step is preferably effected at a heating rate of more than 150 K/s and in particular inductively at a heating rate between 500 K/s and 1500 K/s.

15. Cold-rolled flat steel product for use as packaging steel and in particular produced by the method according to one of the preceding claims, having a carbon content of 0.04 to 0.12 wt.%, a weight content of uncombined nitrogen of more than 0.021 wt.% and the following upper limits for the weight content of the alloying constituents:
| | |
|---|---|
| - Mn: | maximum 0.4 %, |
| - Si: | maximum 0.04 %, preferably less than 0.02 %; |
| - Al: | maximum 0.1 %, preferably less than 0.08 %; |
| - Cr: | maximum 0.1 %, preferably less than 0.08 %; |
| - P: | maximum 0.03 %, preferably less than 0.02 %; |
| - Cu: | maximum 0.1 %, preferably less than 0.08 %; |
| - Ni: | maximum 0.15 %, preferably less than 0.08 %; |
| - Sn: | maximum 0.04 %, preferably less than 0.02 %; |
| - As: | maximum 0.02 %, |
| - S: | maximum 0.03 %, preferably less than 0.02 %; |
| - Mo: | maximum 0.05 %, preferably less than 0.02 %; |
| - V: | maximum 0.04 %; |
| - Ti: | maximum 0.05 %, preferably less than 0.02 %; |
| - Nb: | maximum 0.05 %, preferably less than 0.02 %; |
| - B: | maximum 0.005 %; |
other alloying constituents, including contaminants: maximum 0.05 % and the remainder iron, wherein the flat steel product has a multi-phase structure including ferrite and at least one of the structure constituents martensite, bainite and/or troostite and optionally retained austenite, and a tensile strength of more than 650 MPa and an extension at break of more than 5%.

## Revendications

1. Procédé pour fabriquer un acier d'emballage azoté à partir d'un produit en acier laminé à chaud avec une teneur en carbone de 0,04 à 0,12 % en poids ainsi qu'avec des limites supérieures suivantes pour la fraction en poids des constituants d'alliage :
- Mn : max. 0,4 %,
- Si : max. 0,04 %,
- Al : max. 0,1 %,
- Cr : max. 0,1 %,
- P : max. 0,03 %,
- Cu : max. 0,1 %,
- Ni : max. 0,15 %,
- Sn : max. 0,04 %,
- As : max. 0,02 %,
- S : max. 0,03 %,
- Mo : max. 0,05 %,
- V : max. 0,04 %,
- Ti : max. 0,05 %,
- Nb : max. 0,05 %,
- B : max. 0,005 %,
- d'autres constituants d'alliage, y compris les impuretés : max. 0,05 % et le reste en fer, **caractérisé par** des étapes suivantes :
- de laminage à froid du produit en acier en un produit plat en acier ;
- de recuit avec recristallisation du produit plat en acier laminé à froid dans un four de recuit, en particulier dans un four de recuit continu, dans lequel un gaz contenant de l'azote est acheminé dans le four de recuit et est dirigé sur le produit plat en acier pour introduire de l'azote non lié dans le produit plat en acier en une quantité correspondant à une concentration supérieure à 0,021 % en poids ou pour augmenter la quantité d'azote non lié dans le produit plat en acier à une concentration supérieure à 0,021 % en poids ;
- de refroidissement du produit plat en acier recuit avec recristallisation à une température ambiante avec une vitesse de refroidissement d'au moins 100 K/s directement après le recuit avec recristallisation.

2. Procédé selon la revendication 1, dans lequel le produit en acier est un acier laminé à chaud et azoté par nitruration d'une matière fondue en acier à une teneur en azote de 160 ppm au maximum.

3. Procédé selon la revendication 2, **caractérisé en ce que** la nitruration de la matière fondue en acier est effectuée par l'acheminement d'un gaz contenant de l'azote et/ou d'une matière solide contenant de l'azote dans la matière fondue en acier, en particulier par l'acheminement d'azote gazeux (N₂) et/ou de chaux azotée (CaCN₂) et/ou de manganèse azoté (MnN) dans la matière fondue en acier.

4. Procédé selon l'une quelconque des revendications précédentes, **caractérisé en ce que** pendant le recuit avec recristallisation du produit plat en acier laminé à froid, du gaz ammoniac (NH₃) est acheminé dans le four de recuit et de manière préférée est dirigé au moyen d'au moins une buse de pulvérisation sur le produit plat en acier.

5. Procédé selon la revendication 4, **caractérisé en ce qu'**un équilibre en ammoniac avec une concentration inférieure à 15 % en poids et de manière préférée dans la plage de 0,05 à 1,5 % en poids est réglé dans le four de recuit par l'acheminement de gaz ammoniac (NH₃) .

6. Procédé selon l'une quelconque des revendications 4 ou 5, **caractérisé en ce que** la concentration d'équilibre en ammoniac réglée dans le four de recuit par l'acheminement de gaz ammoniac (NH₃) est détectée avec un capteur d'ammoniac et la valeur de mesure détectée de la concentration d'équilibre en ammoniac est utilisée pour une régulation de la quantité en gaz ammoniac acheminée par unité de temps dans le four de recuit.

7. Procédé selon l'une quelconque des revendications précédentes, **caractérisé en ce que** la quantité d'azote non lié après la nitruration du produit plat en acier laminé à froid dans le four de recuit est comprise entre 210 et 500 ppm, de manière préférée entre 210 et 350 ppm.

8. Procédé selon l'une quelconque des revendications 1 à 6, **caractérisé en ce que** la répartition de concentration de l'azote non lié dans le produit plat en acier azoté sur l'épaisseur du produit plat en acier fluctue de moins de ± 10 ppm de la valeur de la concentration moyenne (quantité) de l'azote introduit, dans lequel la concentration moyenne (quantité) en azote non lié est comprise de manière préférée entre 210 et 350 ppm.

9. Procédé selon l'une quelconque des revendications précédentes, **caractérisé en ce que** le recuit avec recristallisation du produit plat en acier laminé à froid est effectué au moyen du passage du produit plat en acier à travers un four de recuit continu, dans lequel le produit plat en acier est réchauffé au moins brièvement à des températures supérieures à la température Acl.

10. Procédé selon l'une quelconque des revendications précédentes, **caractérisé en ce que** le produit plat en acier laminé à froid est réchauffé dans le four de recuit d'abord lors d'une première étape de réchauffage à une température de maintien (Tₕ) inférieure à la température Acl et en particulier dans la plage de 600 °C à 650 °C et est maintenu à cette température de maintien (Tₕ) lors d'une étape de maintien qui suit pour soumettre à l'action du gaz contenant de l'azote le produit plat en acier laminé à froid à la température de maintien (Tₕ) aux fins de l'azotation.

11. Procédé selon l'une quelconque des revendications 1 à 9, **caractérisé en ce que** le produit plat en acier laminé à froid est réchauffé dans le four de recuit d'abord lors d'une première étape de réchauffage à une température de maintien (Tₕ) supérieure à la température Acl et en particulier dans la plage de 740 °C à 760 °C et est maintenu à ladite température de maintien (Tₕ) lors d'une étape de maintien qui suit, dans lequel le produit plat en acier laminé à froid est soumis à l'action du gaz contenant de l'azote pendant la phase de réchauffage et/ou pendant la phase de maintien aux fins de l'azotation.

12. Procédé selon la revendication 11, **caractérisé en ce que** le produit plat en acier laminé à froid est réchauffé directement après l'azotation dans le four de recuit lors d'une deuxième étape de réchauffage à une température de recuit (T_{g}) supérieure à la température Acl et en particulier entre 740 °C ≤ T_{g} ≤ 760 °C puis est refroidi à une vitesse de refroidissement supérieure à 100 K/s.

13. Procédé selon l'une quelconque des revendications 10 à 12, **caractérisé en ce que** le produit plat en acier laminé à froid est réchauffé lors de la première étape de réchauffage de la température ambiante sur la température de maintien (Tₕ) à une vitesse de chauffe de 15 à 25 K/s et en particulier de 20 K/s.

14. Procédé selon la revendication 12, **caractérisé en ce que** le produit plat en acier laminé à froid est réchauffé lors de la deuxième étape de réchauffage de la température de maintien (Tₕ) à la température de recuit (T_{g}) à une vitesse de chauffe supérieure à 100 K/s, dans lequel le réchauffage est effectué lors de la deuxième étape de réchauffage de manière préférée à une vitesse de chauffe supérieure à 150 K/s et en particulier par induction à une vitesse de chauffe entre 500 K/s et 1 500 K/s.

15. Produit plat en acier laminé à froid pour son utilisation en tant qu'acier d'emballage et en particulier fabriqué avec le procédé selon l'une quelconque des revendications précédentes, avec une teneur en carbone de 0,04 à 0,12 % en poids, une fraction en poids d'azote non lié supérieure à 0,021 % en poids ainsi qu'avec des limites supérieures suivantes pour la fraction en poids des constituants d'alliage :
- Mn : max. 0,4 %,
- Si : max. 0,04 %, de manière préférée inférieure à 0, 02 %,
- Al : max. 0,1 %, de manière préférée inférieure à 0, 08 %,
- Cr : max. 0,1 %, de manière préférée inférieure à 0, 08 %,
- P : max. 0,03 %, de manière préférée inférieure à 0, 02 %,
- Cu : max. 0,1 %, de manière préférée inférieure à 0, 08 %,
- Ni : max. 0,15 %, de manière préférée inférieure à 0, 08 %,
- Sn : max. 0,04 %, de manière préférée inférieure à 0, 02 %,
- As : max. 0,02 %,
- S : max. 0,03 %, de manière préférée inférieure à 0, 02 %,
- Mo : max. 0,05 %, de manière préférée inférieure à 0, 02 %,
- V : max. 0,04 %,
- Ti : max. 0,05 %, de manière préférée inférieure à 0, 02 %,
- Nb : max. 0,05 %, de manière préférée inférieure à 0, 02 %,
- B : max. 0,005 %,
- d'autres constituants d'alliage, y compris les impuretés : max. 0,05 % et le reste en fer, dans lequel le produit plat en acier présente une structure polyphasée, qui comprend de la ferrite et au moins un des constituants de structure martensite, bainite et/ou troostite ainsi qu'éventuellement austénite résiduelle, ainsi qu'une résistance à la traction supérieure à 650 MPa et un allongement à la rupture supérieur à 5 %.
